# EUROPÄISCHE PATENTSCHRIFT

(11) **EP 2 721 429 B1**
(45) Veröffentlichungstag und Bekanntmachung des Hinweises auf die Patenterteilung: **10.07.2019**
(21) Anmeldenummer: 12728222.6
(22) Anmeldetag: 13.06.2012
(51) Int. Cl.: G01S 7/02, G06Q 10/08

(54) **MODUL UND VERFAHREN ZUM ERZEUGEN EINES STEUERSIGNALS VOR DEM START EINES FLUGZEUGS**
MODULE AND METHOD FOR GENERATING A CONTROL SIGNAL BEFORE AN AIRCRAFT IS STARTED
MODULE ET PROCÉDÉ POUR GÉNÉRER UN SIGNAL DE COMMANDE AVANT LE DÉMARRAGE D'UN AÉRONEF

(30) Priorität: 16.06.2011 DE 102011104436
(43) Veröffentlichungstag der Anmeldung: 23.04.2014
(73) Patentinhaber: Unruh, Jürgen, 65239 Hochheim am Main (DE)
(72) Erfinder: UNRUH, Jürgen, 65239 Hochheim am Main (DE); WITTE, Markus, 33332 Gütersloh (DE)
(74) Vertreter: Fuchs Patentanwälte Partnerschaft mbB
(86) Internationale Anmeldenummer: PCT/EP2012/061169
(87) Internationale Veröffentlichungsnummer: WO 2012/171943

(56) Entgegenhaltungen:
- WO-A1-2004/063766
- US-B1- 6 281 797
- US-B1- 7 791 455

## Beschreibung

Die Erfindung betrifft ein Sensormodul zum Erzeugen eines Steuersignals vor einem Flug. Bestimmte Geräte, wie beispielsweise Mobilfunk-Sender, dürfen während eines Flugs nicht betrieben werden. Wünschenswert ist es, dass diese Geräte rechtzeitig automatisch abgeschaltet werden. Das erfindungsgemäß erzeugte Steuersignal kann zum Abschalten solcher Geräte verwendet werden.

Es sind Sensormodule bekannt, die mit Sensoren bestimmte Messwerte aufnehmen und die ein Steuersignal erzeugen, sobald Messwerte aufgenommen werden, die für den Eintritt in ein Flugzeug charakteristisch sind. Ein Kriterium, an dem sich Sensormodule gemäß dem Stand der Technik orientieren, ist die Frequenz des Bordnetzes, siehe US 6,281,797 B1 und US 7,501,944 B2. Diese Frequenz war bislang einheitlich und lag bei 400 Hz. Das Sensormodul konnte also diese Frequenz überwachen und aus der Anwesenheit eines 400 Hz-Signals schließen, dass es sich in einem Flugzeug befand. Bei neueren Flugzeugen wie dem Airbus A 380 und der Boeing 787 ist die Frequenz im Bordnetz variabel zwischen 370 Hz und 770 Hz und wird für jeden Verbraucher nach Bedarf umgerichtet.

In der US 6,281,791 B1 ist ein Modul zur Positionsbestimmung von Luftfrachtcontainern offenbart, das eine fest eingestellte Frequenz, speziell eine Frequenz von 400 Hz, detektiert. Die feste Frequenz wird in vielen Flugzeugtypen von einem zentralen Umrichter an Bord des Flugzeugs generiert. In Großflugzeugen ist dieser Umrichter jedoch sehr schwer und vermindert die Nutzlast entsprechend. In der US 7,791,455 B1 ist ein Verfahren und eine Vorrichtung beschrieben, mit dem sich der Betriebszustand einer transportablen elektronischen Einheit automatisch schalten läßt. Dazu umfaßt die Vorrichtung einen ATC-Sensor, der ein elektrisches Signal generiert, wenn er sich in der Nähe eines Flugszeugs befindet. Es werden daher auch Transpondersignale erfaßt, die von anderen am Boden rollenden Flugzeugen ausgehen. Gegenstand der WO 2004/063766 A1 ist ein Modul zur Ortsbestimmung von Containern, die in Flugzeugen befördert werden. Das Modul hört auf Positionsangaben zu senden, wenn es sich in einem elektromagnetischem Feld mit einer Frequenz von 400 Hz befindet. Diese Frequenz ist typisch für viele ältere Flugzeugmodelle. Das Bordnetz in modernen Flugzeugen weist jedoch keine feste Frequenz von 400 Hz auf, sondern eine variable Frequenz im Bereich von 370 bis 770 Hz.

Der Erfindung liegt die Aufgabe zu Grunde, ein Verfahren und ein Sensormodul vorzustellen, die vor dem Flug mit hoher Sicherheit ein Steuersignal erzeugen. Die Aufgabe wird gelöst durch die Merkmale der unabhängigen Ansprüche. Vorteilhafte Ausführungsformen finden sich in den Unteransprüchen.

Das Sensormodul umfasst erfindungsgemäß einen Bordnetzsensor für ein vom Bordnetz des Flugzeugs abgestrahltes elektromagnetisches Feld und einen ATC-Sensor für ein vom Flugzeug abgegebenes ATC-Signal. Das Sensormodul erzeugt ein Steuersignal, wenn entweder der Bordnetzsensor ein oberhalb eines vorgegebenen Schwellwerts liegendes Signal des Bordnetzes entdeckt oder der ATC-Sensor ein oberhalb eines vorgegebenen Schwellwerts liegendes ATC-Signal entdeckt.

Zunächst werden einige Begriffe erläutert. Das Steuersignal kann von einem beliebigen Gerät genutzt werden, um vor dem Flug eine bestimmte Aktion durchzuführen. In vielen Fällen wird das Steuersignal dazu genutzt, ein Gerät abzuschalten, dass während des Flugs nicht in Betrieb sein darf. Das Gerät kann beispielsweise ein GSM-Modul sein, das während des Flugs abgeschaltet sein muss. Das Steuersignal kann dauerhaft am Steuerausgang anliegen, solange das Sensormodul sich in dem Flugzeug befindet. Möglich ist es auch, dass nach Überschreiten eines Schwellwerts nur kurzzeitig ein Steuersignal erzeugt wird.

Der Begriff ATC-Signal (ATC = Air Traffic Control) bezeichnet ein Funksignal, das im Rahmen der Flugverkehrskontrolle zwischen einer Leitstelle am Boden und einem Flugzeug ausgetauscht wird. Dabei werden sowohl Signale von dem Flugzeug an die Leitstelle als auch Signale von der Leitstelle an das Flugzeug gesendet. Für die beiden Kommunikationsrichtungen werden unterschiedliche Frequenzen verwendet. Derzeit sendet die Leitstelle auf einer Frequenz von 1030 MHz und das Flugzeug auf einer Frequenz von 1090 MHz. Wenn im Rahmen der Erfindung von einem ATC-Signal gesprochen wird, ist das vom Flugzeug ausgesendete ATC-Signal gemeint.

Das Bordnetz bezeichnet das elektrische Netz an Bord eines Flugzeugs, mit dem elektrische Verbraucher betrieben werden. Das Flugzeug umfasst einen Generator, mit dem elektrische Energie in das Bordnetz eingespeist werden kann und zu den Verbrauchern geleitet werden kann.

Für die Flugsicherheit ist es wichtig, dass beim Eintritt in ein Flugzeug mit hoher Sicherheit ein Steuersignal am Steuerausgang des Sensormoduls erzeugt wird. Angestrebt wird, dass es in lediglich einem von 10⁶ Fällen fehlerhaft kein Steuersignal gibt.

Da das Bordnetz anders als bei früheren Flugzeugen nicht mehr mit einer festen Frequenz betrieben wird, lässt sich diese Sicherheit mit einem Sensormodul, das sich alleine am Bordnetz orientiert, nicht mehr ohne weiteres erreichen. Mit der Erfindung wird deswegen vorgeschlagen, dass das Sensormodul sich mit dem ATC-Signal an einem zweiten Kriterium orientieren soll. Eine hohe Sicherheit des Steuersignals wird dadurch erreicht, dass das Steuersignal bereits dann erzeugt wird, wenn nur eines der beiden Kriterien auf den Eintritt in ein Flugzeug hindeutet. Dabei war es nicht ohne weiteres zu erwarten, dass das vom Flugzeug ausgesendete ATC-Signal für die Zwecke der Erfindung als geeignetes Kriterium verwendet werden kann. Das ATC-Signal ist nämlich dazu bestimmt, vom Flugzeug nach außen in Richtung der Leitstelle gesendet zu werden. Es wäre deswegen zu erwarten gewesen, dass das vom eigenen Flugzeug ausgesendete ATC-Signal nicht ohne weiteres von den ATC-Signalen anderer Flugzeuge zu unterscheiden ist. Versuche haben aber gezeigt, dass das ATC-Signal im Inneren des Flugzeugs deutlich unterschieden werden kann von anderen Signalen, die der ATC-Sensor außerhalb des Flugzeugs empfängt.

Der Bordnetzsensor umfasst vorzugsweise einen Spektrumanalysator für das Frequenzband, innerhalb dessen das Bordnetz betrieben wird. Nach derzeitigem Stand liegt die Frequenz des Bordnetzes immer zwischen 370 Hz und 770 Hz liegt. Der Spektrumanalysator sollte also das Frequenzband zwischen 370 Hz und 770 Hz umfassen.

Die Hülle des Flugzeugs bildet einen Faradayschen Käfig für das Bordnetz. Von dem Bordnetz ausgehende elektrische Signale dringen also praktisch nicht aus dem Flugzeug nach außen. Der vorgegebene Schwellwert wird so ausgewählt, dass die außerhalb des Flugzeugs vorliegende Signalstärke unterhalb des Schwellwerts liegt und dass die innerhalb des Flugzeugs vorliegende Signalstärke oberhalb des Schwellwerts liegt.

Der Bordnetzsensor kann so ausgelegt sein, dass er auslöst, wenn nur eine Frequenz innerhalb des Frequenzbands des Bordnetzes den vorgegebenen Schwellwert überschreitet. In alternativen Ausführungsformen können weitere Charakteristika berücksichtigt werden, wie beispielsweise die von bestimmten Verbrauchern ausgesendeten elektromagnetischen Wellen. Das Auslösen des Bordnetzsensors hat genau wie das Auslösen des ATC-Sensors zur Folge, dass das Sensormodul das Steuersignal gibt.

Das von dem Bordnetz abgestrahlte Feld hat eine elektrische und eine magnetische Komponente. Es kann ausreichen, wenn der Bordnetzsensor entweder die elektrische Komponente oder die magnetische Komponente misst. Alternativ kann der Bordnetzsensor einen Sensor für die elektrische Komponente und einen Sensor für die magnetische Komponente umfassen. Der Bordnetzsensor kann so ausgelegt sein, dass er auslöst, wenn einer der beiden Sensoren auslöst. Um fehlerhafte Auslösungen zu vermeiden, kann der Bordnetzsensor auch so ausgelegt sein, dass er erst dann auslöst, wenn beide Sensoren auslösen.

Das ATC-Signal wird von dem Flugzeug regelmäßig auf einer festen Frequenz von derzeit 1090 MHz ausgesendet. Der ATC-Sensor ist vorzugsweise so ausgelegt, dass er Signale dieser Frequenz empfängt und auslöst, wenn der vorgegebene Schwellwert überschritten ist. Bei Messungen, die zur Ermittlung des Schwellwerts durchgeführt wurden, hat sich herausgestellt, dass die Ermittlung eines geeigneten Schwellwerts einfach ist. Befindet der ATC-Sensor sich auf dem Vorfeld des Flughafens, ergeben die ATC-Signale von startenden oder auf dem Vorfeld fahrenden Flugzeugen je nach Abstand zum ATC-Sensor Messwerte zwischen -34 dB und - 29 dB. Befindet sich der ATC-Sensor selbst in einem Flugzeug, so ergeben die ATC-Signale von anderen in der Nähe befindlichen Flugzeugen Messwerte zwischen -44 dB und -32 dB. Die Messwerte hängen sowohl davon ab, wie weit das andere Flugzeug entfernt ist, als auch von der Position des ATC-Sensors in dem Flugzeug. Die Messungen wurden durchgeführt in verschiedenen Bereichen des Flugzeugs vom Cockpit bis in den hinteren Ladebereich. Hingegen ergeben bei einem im Flugzeug befindlichen ATC-Sensor die ATC-Signale des eigenen Flugzeugs Messwerte zwischen -17 dB und -15 dB. Ein zwischen -17 dB und -29 dB liegender Schwellwert kann ohne weiteres festgelegt werden.

Außerhalb der reinen Signalstärke kann sich der ATC-Sensor auch an weiteren Charakteristika des ATC-Signals orientieren. Eines dieser Merkmale ist es, dass die ATC-Signale des Flugzeugs gepulst und in Abständen von 2 s ausgesendet werden.

Das Sensormodul kann so ausgelegt sein, dass ein einheitliches Steuersignal erzeugt wird, unabhängig davon, ob der Bordnetzsensor oder der ATC-Sensor auslöst. In alternativen Ausführungsformen wird ein erstes Steuersignal erzeugt, wenn der Bordnetzsensor auslöst, und ein zweites Steuersignal, wenn der ATC-Sensor auslöst. Die beiden Steuersignale können dazu genutzt werden, in dem abzuschaltenden Gerät zwei Komponenten unabhängig von einander zu deaktivieren. So könnte beispielsweise in einem GSM-Modul mit dem ersten Steuersignal die Stromzufuhr zu dem Sender unterbrochen werden und mit dem zweiten Steuersignal die Verbindung von dem Sender zur Antenne unterbrochen werden. Dies erhöht die Sicherheit, dass das Gerät tatsächlich abgeschaltet wird.

Das Sensormodul kann mit einer eigenen Energieversorgung ausgestattet sein. Allerdings erhöht dies den Wartungsaufwand, da beispielsweise Batterien regelmäßig ausgetauscht werden müssen. In einer vorteilhaften Ausführungsform hat das Sensormodul deswegen einen Versorgungsanschluss, über den dem Sensormodul elektrische Energie zugeführt werden kann. Dadurch wird es möglich, das Sensormodul an das abzuschaltende Gerät anzuschließen und von diesem mit elektrischer Energie versorgen zu lassen.

In einer vorteilhaften Ausführungsform wird ein und dieselbe Auswertung in dem Sensormodul mehrfach vorgenommen. Weichen die Ergebnisse voneinander ab, kann dies ein Hinweis auf einen Fehler im Sensormodul sein. In einer vorteilhaften Ausführungsform umfassen der Bordnetzsensor und/oder der ATC-Sensor drei gleichartige Sensoren. Vorzugsweise ist das Sensormodul so ausgelegt, dass ein Steuersignal erzeugt wird, sobald es einen Hinweis auf einen Fehler in dem Sensormodul gibt. Dies trägt dazu bei, eine hohe Abschaltsicherheit zu erreichen. Im Zweifel soll das Sensormodul lieber ein Steuersignal geben, obwohl es nicht im Flugzeug ist, anstatt im Flugzeug kein Steuersignal zu geben.

Die Erfindung betrifft außerdem ein System aus einem solchen Sensormodul und einem Gerät, das abgeschaltet wird, wenn das Sensormodul ein Steuersignal gibt. Das Gerät kann eine Energieversorgung aufweisen, über die das Sensormodul versorgt wird. Wenn das Sensormodul ein erstes Steuersignal und ein zweites Steuersignal gibt, kann dieses dazu genutzt werden, unterschiedliche Komponenten des Geräts zu deaktivieren.

Das Gerät kann beispielsweise eine für Transportcontainer bestimmtes Tracking-Unit sein, die laufend die Position des Containers bestimmt und die Positionsdaten an einen Empfänger sendet. Die Positionsbestimmung kann beispielsweise auf einem satellitengestützten Systemen wie GPS oder Galileo beruhen. Die Datenübermittlung kann über einen Mobilfunkstandard abgewickelt werden wie GSM, GPRS, UMTS oder LTE sein oder andere Mobilfunkstandards der Zukunft. Beim Eintritt in ein Flugzeug kann der Mobilfunk-Sender, der während des Flugs nicht in Betrieb sein darf, mit dem erfindungsgemäßen Verfahren abgeschaltet werden. Möglich ist es auch, die Mobilfunkgeräte der Passagiere mit dem erfindungsgemäßen Verfahren abzuschalten. Den Passagieren wird es dann erspart, dies von Hand zu tun. Das Gerät kann auch ein beliebiges sonstiges elektronisches oder anderes Gerät sein, das beim Eintritt in ein Flugzeug abgeschaltet werden soll oder eine sonstige Aktion durchführen soll.

Die Erfindung betrifft ferner ein entsprechendes Verfahren zum Erzeugen eines Steuersignals vor dem Start eines Flugzeugs. Bei dem Verfahren werden das von dem Bordnetz des Flugzeugs abgestrahlte elektromagnetische Feld und das von dem Flugzeug abgegebene ATC-Signal gemessen. Es wird ein Steuersignal erzeugt, wenn ein oberhalb eines vorgegebenen Schwellwerts liegendes Signal des Bordnetzes gemessen wird oder wenn ein oberhalb eines vorgegebenen Schwellwerts liegendes ATC-Signals gemessen wird.

Das Verfahren kann mit weiteren Merkmalen kombiniert werden, die oben im Zusammenhang mit dem erfindungsgemäßen Sensormodul beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung eines Flughafens;
- Fig. 2:: einen in einem Flugzeug zu transportierenden Container;
- Fig. 3:: eine schematische Darstellung eines Frequenzspektrums des Bordnetzes außerhalb (A) und innerhalb (B) eines Flugzeugs;
- Fig. 4:: eine schematische Darstellung eines ATC-Frequenzspektrums außerhalb (A) und innerhalb (B) eines Flugzeugs;
- Fig. 5-7:: ein erfindungsgemäßes Sensormodul in unterschiedlichen Zuständen; und
- Fig. 8:: ein erfindungsgemäße System, umfassend ein Sensormodul und ein abzuschaltendes Gerät.

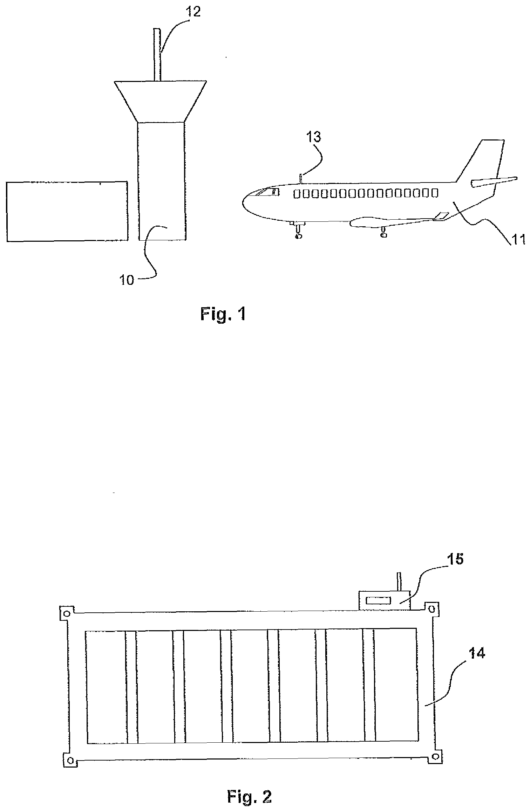

Mit einem in Fig. 2 gezeigten Container 14 können Güter transportiert werden. Der Container 14 ist mit einer Tracking-Unit 15 ausgestattet, die mit einem GPS-Modul laufend die geographische Position des Containers 14 ermittelt. Die Positionsdaten werden über einen GSM-Sender an einen Empfänger gesendet. Der Empfänger kann beispielsweise die Spedition sein, die für den Transport des Containers 14 zuständig ist. Es ist dadurch jederzeit die Information verfügbar, wo der Container 14 sich befindet.

Wenn der Container 14 in einem Flugzeug 11 transportiert wird, ist der Betrieb eines GSM-Senders aufgrund luftfahrtrechtlicher Bestimmungen nicht zulässig. Während des Flugs muss der GSM-Sender also abgeschaltet sein. Das erfindungsgemäße Verfahren bzw. das Sensormodul können dazu verwendet werden, den GSM-Sender vor dem Flug automatisch und mit hoher Sicherheit abzuschalten.

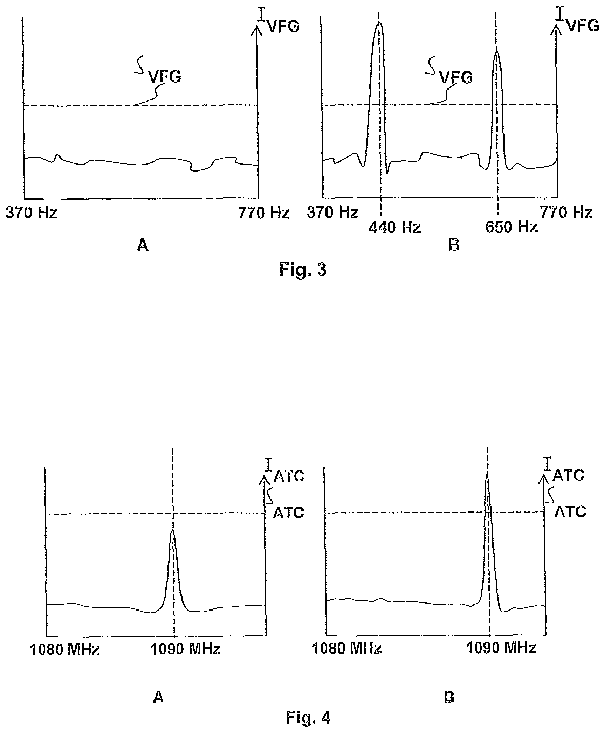

Bei neueren Flugzeugtypen wird das Bordnetz nicht mehr mit einer konstanten Frequenz gespeist, sondern die Frequenz schwankt je nach Betriebszustand zwischen 370 Hz und 770 Hz. In Fig. 3 ist das betreffende Frequenzspektrum beispielhaft dargestellt. Außerhalb des Flugzeugs 11 (siehe Abbildung 3A) gibt es im Frequenzbereich zwischen 370 Hz und 770 Hz nur ein undefiniertes Rauschen. Dies gilt auch in der unmittelbaren Umgebung des Flugzeugs 11, da die Hülle des Flugzeugs als Faradayscher Käfig wirkt, der eine vom Bordnetz ausgehende Strahlung nach außen hin abschirmt. Im Inneren des Flugzeugs 11 (siehe Abbildung 3B) treten bestimmte Frequenzen innerhalb dieses Frequenzbands mit erhöhter Intensität auf. Hier läuft beispielsweise ein von einem der Triebwerke angetriebener Generator mit konstanter Drehzahl, der das Bordnetz mit einer Frequenz von 440 Hz speist. Ein Verbraucher ist in Betrieb, der mit einer Frequenz von 650 Hz arbeitet. Der Verbraucher ist über einen Umrichter mit dem Bordnetz verbunden. Der Umrichter greift die erforderliche Leistung aus dem Bordnetz ab und stellt sie dem Verbraucher mit einer Frequenz von 650 Hz zur Verfügung. In dem Frequenzspektrum, das im Inneren des Flugzeugs 11 aufgenommen wird, zeigen sich deshalb bei 440 Hz und 650 Hz zwei Peaks. Die Intensität I_{VFG} beider Peaks ist größer als ein vorgegebener Schwellwert S_{VFG}, der in Fig. 3 mit einer gestrichelten Linie angedeutet ist.

Im Rahmen der Flugverkehrskontrolle werden zwischen einem Tower 10 eines Flughafens und einem Flugzeug 11 ATC-Signale ausgetauscht. Über eine Antenne 12 des Towers 10 wird ein Abfragesignal an das Flugzeug 11 gesendet, welches das Flugzeug 11 über eine Antenne 13 empfängt. Das Flugzeug 11 antwortet mit einem Signal, in dem bestimmte Informationen wie beispielsweise die Identität des Flugzeugs enthalten sind. Die Frequenz des vom Tower 10 ausgesendeten Signals ist 1030 MHz, die Frequenz des vom Flugzeug ausgesendeten Signals ist 1090 MHz. Das 1090 MHz-Signal ist das von dem erfindungsgemäßen Sensormodul berücksichtigte ATC-Signal.

Nimmt man auf dem Vorfeld eines Flughafens ein Frequenzspektrum im Bereich von 1090 MHz auf, so zeigt sich gemäß Fig. 4A ein Peak, dessen Intensität I_{ATC} aus dem allgemeinen Rauschen herausragt. Befindet man sich im Inneren eines Flugzeugs und sind die Türen sowie Luken des Flugzeugs geschlossen, so hat das von dem Flugzeug abgegebene ATC-Signal gemäß Fig. 4B eine deutlich höhere Intensität I_{ATC}. Zwischen diesen beiden Werten wird ein Schwellwert S_{ATC} festgelegt.

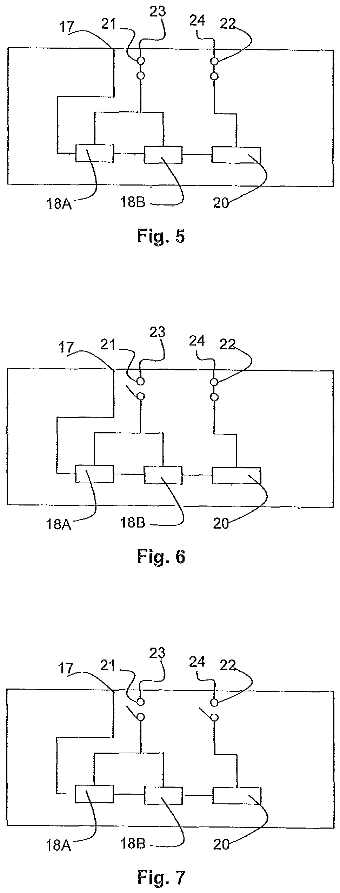

Ein in Fig. 5 gezeigtes erfindungsgemäßes Sensormodul umfasst einen Sensor 18A für die elektrische Komponente und einen Sensor 18B für die magnetische Komponente eines elektromagnetischen Felds im Frequenzbereich zwischen 370 Hz und 770 Hz. Die Sensoren 18A, 18B bilden zusammen einen Bordnetzsensor 18 im Sinne der Erfindung. Das Sensormodul umfasst außerdem einen ATC-Sensor 20 für ein elektromagnetisches Signal mit der Frequenz 1090 MHz. Dem Sensormodul wird über einen Versorgungsanschluss 17 elektrische Energie zugeführt, mit der der Bordnetzsensor 18 und der ATC-Sensor 20 betrieben werden. Der Bordnetzsensor 18 ist über einen ersten Schalter 21 mit einem ersten Signalausgang 23 verbunden. Aus der Stellung des Schalters 21 ergibt sich, ob ein Steuersignal an dem ersten Signalausgang 23 anliegt. Dies ist der Fall, wenn der erste Schalter 21 geöffnet ist. Der ATC-Sensor 20 ist über einen zweiten Schalter 22 mit einem zweiten Signalausgang 24 verbunden. Aus der Stellung des zweiten Schalters 22 ergibt sich, ob ein Steuersignal an dem zweiten Signalausgang 24 anliegt. Dies ist der Fall, wenn der zweite Schalter 22 geöffnet ist.

Der Bordnetzsensor 18 deckt mit den beiden Sensoren 18A, 18B jeweils das Frequenzband zwischen 370 Hz und 770 Hz ab. Die Sensoren 18A, 18B umfassen jeweils einen Spektrumanalysator, der ermittelt, in welcher Intensität die verschiedenen Frequenzen in dem aufgenommenen Signal enthalten sind. Eine von dem Spektrumanalysator 22 ermittelte Frequenzverteilung kann beispielsweise so aussehen wie in Fig. 3 dargestellt. Liegt die Intensität I_{VFG} aller Frequenzen in dem Frequenzband von 370 Hz bis 770 Hz unterhalb des Schwellwerts S_{VFG}, so bleibt der Schalter 21 geschlossen und an dem Signalausgang 23 liegt kein Steuersignal an. Stellt entweder der elektrische Sensor 18A oder der magnetische Sensor 18B fest, dass die Intensität I_{VFG} nur einer Frequenz innerhalb des Frequenzbands oberhalb des Schwellwerts S_{VFG} liegt, löst der Bordnetzsensor 18 aus. Der Schalter 22 wird geöffnet und damit ein Steuersignal an den Signalausgang 23 angelegt. Das Sensormodul hat dann den in Fig. 6 gezeigten Zustand. Da der Schwellwert S_{VFG} entsprechend gewählt ist, kann aus dem Steuersignal am Signalausgang 23 geschlossen werden, dass das Sensormodul sich nun in einem Flugzeug befindet. Das Steuersignal kann dazu genutzt werden, ein Gerät abzuschalten, das an Bord eines Flugzeugs nicht in Betrieb sein darf.

Parallel zu dem Bordnetzsensor 18 empfängt der ATC-Sensor 20 elektromagnetische Signale mit der Frequenz 1090 MHz. Solange die Intensität I_{ATC} des Signals unterhalb des Schwellwerts S_{ATC} liegt, bleibt der Schalter 22 geschlossen. Überschreitet die Intensität I_{ATC} den Schwellwert S_{ATC}, löst der ATC-Sensor 20 aus. Der Schalter 22 wird geöffnet und damit ein Steuersignal an den Signalausgang 24 angelegt. Der Schwellwert S_{ATC} ist so gewählt, dass er durch die ATC-Signale, die außerhalb eines Flugzeugs empfangen werden, nicht überschritten wird. Nur wenn das Sensormodul sich innerhalb eines Flugzeugs befindet, überschreiten die von dem eigenen Flugzeug ausgesendeten ATC-Signale den Schwellwert S_{ATC}. Da die ATC-Signale des eigenen Flugzeugs vor jedem Flug ausgesendet werden, ist sichergestellt, dass ein Gerät über das Steuersignal am Signalausgang 24 rechtzeitig ausgeschaltet werden kann.

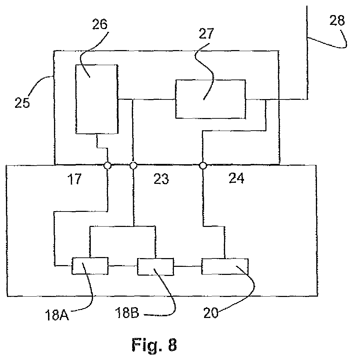

Ein in Fig. 8 gezeigtes erfindungsgemäßes System umfasst ein Sensormodul und ein abzuschaltendes Gerätes 25. Das abzuschaltende Gerät 25 ist eine Tracking-Unit, die beispielsweise mit einem Container verbunden sein kann. Die Tracking-Unit ermittelt mit dem GPS-Modul laufend die geographische Position und überträgt die Positionsdaten an einen Empfänger. Das abzuschaltende Gerät 25 umfasst eine Batterie 26 und einen Sender 27, der über eine Antenne 28 elektromagnetische Signale aussendet. Es besteht eine Verbindung zwischen der Batterie 26 und dem Versorgungsanschluss 17 des Sensormoduls, so dass das Sensormodul über die Batterie 26 versorgt wird.

Das abzuschaltende Gerät 25 ist an den ersten Signalausgang 23 und den zweiten Signalausgang 24 des Sensormoduls angeschlossen. Bei einem Steuersignal am ersten Signalausgang 23 wird die Stromzufuhr von der Batterie 26 zu dem Sender 27 unterbrochen und der Sender 27 dadurch deaktiviert. Bei einem Steuersignal an dem zweiten Signalausgang 24 des Sensormoduls wird die Verbindung zwischen dem Sender 27 und der Antenne 28 unterbrochen, so dass selbst dann keine Signale mehr ausgesendet werden können, wenn der Sender 27 noch in Betrieb ist.

## Patentansprüche

1. Sensormodul zum Erzeugen eines Steuersignals vor dem Start eines Flugzeuges (11) mit einem Bordnetzsensor (18) für ein vom Bordnetz des Flugzeuges abgestrahltes elektromagnetisches Feld, **dadurch gekennzeichnet, dass** das Sensormodul zusätzlich einen ATC-Sensor (20) für ein von diesem Flugzeug in sein Inneres abgegebenes ATC-Signal umfasst, wobei das Sensormodul dafür ausgelegt ist, das Steuersignal zu erzeugen, wenn eines der folgenden Ereignisse eintritt:
der Bordnetzsensor (18) entdeckt ein oberhalb eines Schwellenwertes (S_{vfg}) liegendes Signal (I_{vfg}) des Bordnetzes;
der ATC-Sensor (20) detektiert ein oberhalb eines Schwellenwertes (S_{ATC}) von -17dB bis -29 dB liegendes 1090MHz ATC-Signal (I_{ATC}),
wobei der Bordnetzsensor (18) einen Spektrumanalysator für das Frequenzband von 370-770 Hz, innerhalb dessen das Bordnetz betrieben wird, und einen Sensor (18A) für die elektrische Komponente des elektromagnetischen Feldes und einen Sensor (18B) für die magnetische Kompetente des elektromagnetischen Feldes umfasst.

2. Sensormodul nach Anspruch 1, **dadurch gekennzeichnet, dass** der Bordnetzsensor (18) dafür ausgelegt ist, auszulösen, wenn das Signal (I_{VFG}) einer Frequenz innerhalb des Frequenzbandes des Bordnetzes den vorgegebenen Schwellenwert (S_{VFG}) überschreitet.

3. Sensormodul nach einem der Ansprüche 1 oder 2, **dadurch gekennzeichnet, dass** beim Auslösen des Bordnetzsensors (18) ein erstes Signal und beim Auslösen des ATC-Sensors (20) ein zweites Signal erzeugt werden.

4. Sensormodul nach einem der Ansprüche 1-3, **dadurch gekennzeichnet, dass** ein Versorgungsanschluss (17) für die Zufuhr elektrischer Energie vorgesehen ist.

5. System aus einem Sensormodul nach einem der Ansprüche 1-4 und einem Gerät (25), das durch ein Steuersignal des Sensormoduls abgeschaltet wird.

6. Verfahren zum Erzeugen eines Steuersignals vor dem Start eines Flugzeuges (11), wobei das von dem Bordnetz des Flugzeuges abgestrahltes elektromagnetische Feld gemessen und ein Steuersignal erzeugt wird, wenn ein oberhalb eines vorgegebenen Schwellenwertes (S_{VFG}) liegendes Signal des Bordnetzes gemessen wird, **dadurch gekennzeichnet, dass** daneben ein von dem Flugzeug abgegebenes 1090 MHz ATC-Signal gemessen und ein Steuersignal erzeugt wird, wenn ein oberhalb eines vorgegebenen Schwellenwertes (S_{ATC}) von -17dB bis -29dB liegendes ATC-Signal gemessen wird, wobei das Bordnetzsignal gemessen wird mit einem Bordnetzsensor, der einen Spektrumanalysator umfasst für das Frequenzband von 370-770 Hz, innerhalb dessen das Bordnetz betrieben wird, und wobei der Bordnetzsensor einen Sensor für die elektrische Komponente des elektromagnetischen Feldes und einen weiteren Sensor für die magnetische Komponente des elektromagnetischen Feldes umfasst.

## Claims

1. Sensor module for generating a control signal prior to the start of an aircraft (11) comprising an onboard electrical system sensor (18) for an electromagnetic field emitted from the onboard electrical system of the aircraft, **characterized in that** the sensor module additionally comprises an ATC sensor (20) for an ATC signal emitted from this aircraft into its interior, wherein the sensor module is configured to generate the control signal when one of the following events occurs:
the onboard electrical system sensor (18) detects a signal (I_{VFG}) of the onboard electrical system above a threshold value (S_{VFG});
the ATC sensor (20) detects a 1090 MHz ATC-Signal (I_{ATC}) above a threshold (S_{ATC}) of -17 dB to -29 dB,
wherein the onboard electrical system sensor (18) comprises a spectrum analyzer for the frequency band of 370 - 770 Hz, within which the onboard electrical system is operated, and a sensor (18A) for the electrical component of the electromagnetic field and a sensor (18B) for the magnetic component of the electromagnetic field.

2. Sensor module according to claim 1, **characterized in that** the onboard electrical system sensor (18) is configured to trigger, if the signal (I_{VFG}) of a frequency within the frequency band of the onboard electrical system exceeds the predetermined threshold value (S_{VFG}).

3. Sensor module according to claim 1 or 2, **characterized in that** if the onboard electrical system sensor (18) triggers, a first signal is generated, and when the ATC sensor (20) triggers, a second signal is generated.

4. Sensor module according to any one of claims 1 to 3, **characterized in that** a supply connection (17) for supplying electrical power is provided.

5. System comprising a sensor module according to any one of claims 1 to 4 and a device (25) which is switched off by a control signal of the sensor module.

6. Method for generating a control signal prior to the start of an aircraft (11), wherein the electromagnetic field emitted from the onboard electrical system of the aircraft is measured and a control signal is generated if a signal of the onboard electrical system above a predetermined threshold (S_{VFG}) is measured,
**characterized in that**
in addition a 1090 MHz ATC signal emitted from the aircraft is measured and a control signal is generated, if an ATC signal above a predetermined threshold (S_{ATC}) of -17dB to -29dB is measured,
wherein the onboard electrical system signal is measured by means of an onboard electrical system sensor which comprises a spectrum analyzer for the frequency band of 370 - 770 Hz, within which the onboard electrical system is operated, and wherein the onboard electrical system sensor comprises a sensor for the electrical component of the electromagnetic field and another sensor for the magnetic component of the electromagnetic field.

## Revendications

1. Module de capteur pour générer un signal de commande avant le décollage d'un aéronef (11), comprenant un capteur de réseau de bord (18) pour un champ électromagnétique rayonné par le réseau de bord de l'aéronef, **caractérisé en ce que** le module de capteur comprend en outre un capteur ATC (20) pour un signal ATC émis par cet aéronef dans son espace intérieur, le module de capteur étant conçu pour générer le signal de commande lorsqu'un des événements suivants survient :
le capteur de réseau de bord (18) détecte un signal (I_{vfg}) du réseau de bord qui est supérieur à une valeur seuil (S_{vfg}) ;
le capteur ATC (20) détecte un signal ATC à 1090 MHz (I_{ATC}) qui est supérieur à une valeur seuil (S_{ATC}) de -17 dB à -29 dB,
le capteur de réseau de bord (18) comprenant un analyseur de spectre pour la bande de fréquences de 370 à 770 Hz dans laquelle le réseau de bord fonctionne, et un capteur (18A) pour la composante électrique du champ électromagnétique et un capteur (18B) pour la composante magnétique du champ électromagnétique.

2. Module de capteur selon la revendication 1, **caractérisé en ce que** le capteur de réseau de bord (18) est conçu pour se déclencher lorsque le signal (I_{VFG}) d'une fréquence dans la bande de fréquences du réseau de bord dépasse la valeur seuil prédéfinie (S_{VFG}).

3. Module de capteur selon l'une des revendications 1 ou 2, **caractérisé en ce qu'**un premier signal est généré lorsque le capteur de réseau de bord (18) se déclenche et un second signal est généré lorsque le capteur ATC (20) se déclenche.

4. Module de capteur selon l'une des revendications 1 à 3, **caractérisé en ce qu'**une connexion d'alimentation (17) est prévue pour la fourniture d'énergie électrique.

5. Système composé d'un module de capteur selon l'une des revendications 1 à 4 et d'un appareil (25) qui est désactivé par un signal de commande du module de capteur.

6. Procédé de génération d'un signal de commande avant le décollage d'un aéronef (11), dans lequel le champ électromagnétique rayonné par le réseau de bord de l'aéronef est mesuré et un signal de commande est généré lorsqu'un signal du réseau de bord qui est supérieur à une valeur seuil prédéfinie (S_{VFG}) est mesuré, **caractérisé en ce qu'**un signal ATC à 1090 MHz émis par l'aéronef est également mesuré et un signal de commande est généré lorsqu'un signal ATC supérieur à une valeur seuil prédéfinie (S_{ATC}) de -17 dB à -29 dB est mesuré, dans lequel le signal de réseau de bord est mesuré avec un capteur de réseau de bord qui comprend un analyseur de spectre pour la bande de fréquences de 370 à 770 Hz dans laquelle le réseau de bord fonctionne, et dans lequel le capteur de réseau de bord comprend un capteur pour la composante électrique du champ électromagnétique et un autre capteur pour la composante magnétique du champ électromagnétique.
